# FASCICULE DE BREVET EUROPEEN

(11) **EP 3 984 859 B1**
(45) Date de publication et mention de la délivrance du brevet: **30.08.2023**
(21) Numéro de dépôt: 21203217.1
(22) Date de dépôt: 18.10.2021
(51) Int. Cl.: B62B 13/16, B62B 17/00, B62B 17/06, B62B 17/08

(54) **LUGE MODULABLE**
MODULARER SCHLITTEN
MODULAR SLEDGE

(30) Priorité: 19.10.2020 FR 2010717
(43) Date de publication de la demande: 20.04.2022
(73) Titulaire: Decathlon, 59650 Villeneuve d'Ascq (FR)
(72) Inventeur: Maillard, Octavien, 59650 Villeneuve d'Ascq (FR); Bonnafous, Jean Baptiste, 59650 Villeneuve d'Ascq (FR); Bousch, Thomas, 59650 Villeneuve d'Ascq (FR)
(74) Mandataire: Sayettat, Julien Christian

(56) Documents cités:
- FR-A1- 2 004 396
- FR-A1- 2 354 911
- GB-A- 1 083 029

## Description

L'invention concerne une luge modulable, ainsi qu'un ensemble comprenant une telle luge modulable et une deuxième luge.

Elle s'applique en particulier aux luges destinées à la pratique d'une activité ludique, notamment pour permettre à au moins un utilisateur de glisser sur un terrain neigeux.

Pour ce faire, on connaît des luges comprenant une coque qui présente une structure externe de glisse et une structure interne d'assise pour au moins un utilisateur.

Pour empêcher la neige de pénétrer dans la coque durant son utilisation, la structure d'assise présente deux parois latérales qui s'étendent chacune verticalement de part et d'autre d'un siège de ladite structure d'assise, ainsi que deux parois respectivement avant et arrière qui présentent chacune un bord libre qui est surélevé par rapport à la structure de glisse.

De façon avantageuse, la coque peut être réalisée en une seule pièce par injection et moulage d'un matériau thermoplastique, ce qui permet de faciliter sa fabrication, et donc d'en réduire son coût, mais également de produire une luge avec un poids réduit, ce qui facilite son utilisation et son transport, notamment par un enfant.

Pour permettre à un utilisateur occupant le siège de contrôler ses déplacements, la luge comprend un dispositif de freinage qui est actionné par au moins une poignée montée sur une des parois latérales. En particulier, on connaît des luges avec un dispositif de freinage équipé de deux poignées d'actionnement montées chacune sur respectivement une paroi latérale, l'utilisateur actionnant sélectivement au moins l'une desdites poignées pour effectuer un freinage.

Par ailleurs, pour permettre à un utilisateur de traîner la luge sur le sol, notamment lorsqu'un autre utilisateur occupe le siège, la paroi avant est équipée d'un moyen d'association d'une corde ou d'une sangle. Ainsi, un adulte peut utiliser la luge pour initier un enfant aux activités de glisse.

Ces luges présentent généralement une assise dont les dimensions ne sont pas adaptées aux jeunes enfants, notamment aux bébés. Ainsi, lors de l'utilisation de la luge, le risque de chute de l'enfant hors de la coque est important. Par ailleurs, un jeune enfant peut actionner les poignées de freinage de façon intempestive, ce qui rend l'utilisation de ces luges laborieuse.

Le document FR-2 004 396 propose une luge qui présente une coque telle que décrite précédemment, ainsi qu'un module qui peut être monté de façon réversible dans ladite coque pour lui conférer une configuration d'assise permettant à un utilisateur de maintenir ses jambes en position fléchie ou tendue.

Le document GB 1,083,029 A montre également une luge modulable.

Cette solution ne donne pas satisfaction, en ce qu'elle ne permet pas d'adapter l'assise d'une luge à un jeune enfant, ni d'empêcher ledit enfant d'actionner des poignées de freinage d'une luge.

L'invention vise à perfectionner l'art antérieur en proposant notamment une luge modulable pouvant s'adapter facilement et de façon sélective à la taille et/ou à l'âge d'un utilisateur, notamment à un adulte et à un jeune enfant.

A cet effet, l'invention est définie dans la revendication 1. Des modes de réalisation préférés sont définis dans les revendications dépendantes. L'invention propose une luge modulable comprenant une coque présentant une structure externe de glisse et une structure interne d'assise pour au moins un utilisateur, ladite structure d'assise présentant deux parois latérales qui s'étendent chacune verticalement de part et d'autre d'un siège de ladite structure d'assise, ladite luge comprenant en outre un dispositif de freinage qui est actionné par au moins une poignée montée sur une des parois latérales, ladite luge comprenant un module présentant une structure alternative d'assise, ledit module étant agencé pour pouvoir être monté de façon réversible dans la coque en venant recouvrir sa structure d'assise afin de conférer à ladite luge une configuration alternative d'assise, ledit module comprenant au moins une structure latérale qui, lorsqu'il est monté dans la coque, est agencée pour venir empêcher l'actionnement de la poignée du dispositif de freinage.

L'invention propose également un ensemble comprenant une telle luge modulable et une deuxième luge comprenant une deuxième coque, le module étant agencé pour pouvoir être monté de façon réversible dans l'une quelconque des coques pour lui conférer une configuration alternative d'assise.

D'autres particularités et avantages de l'invention apparaîtront dans la description qui suit, faite en référence aux figures annexées, dans lesquelles :
- la figure 1 représente de façon schématique en vue de côté l'empilement des coques et du module d'un ensemble selon l'invention ;
- la figure 2 représente en perspective vue de dessus les trois éléments composant l'ensemble de la figure 1 ;
- les figures 3a, 3b et 3c représentent chacune l'ensemble de la figure 1 avec ses différents éléments empilés les uns sur les autres, en coupe suivant respectivement un plan vertical longitudinal (figure 3a), le plan vertical transversal X-X de la figure 3a (figure 3b) et le plan vertical transversal Y-Y de la figure 3a (figure 3c) ;
- les figures 4a, 4b, 4c et 4d représentent en perspective vue de l'avant différentes étapes de montage du module sur l'une des coques de l'ensemble des figures précédentes.

En relation avec ces figures, on décrit ci-dessous une luge modulable, ainsi qu'un ensemble comprenant une telle luge modulable et une deuxième luge.

Les luges comprennent respectivement une première et une deuxième coque 1a, 1b, chaque coque 1a, 1b présentant une structure externe 2a, 2b de glisse, notamment adaptée pour un terrain neigeux, et une structure interne 3a, 3b d'assise pour au moins un utilisateur.

De façon avantageuse, les coques 1a, 1b présentent une forme et un agencement identiques, et ne diffèrent que par leurs dimensions, ce qui leur permet de recevoir un nombre différent d'utilisateurs à la fois et/ou des utilisateurs de tailles et/ou d'âges différentes.

Dans le mode de réalisation représenté, l'ensemble comprend ainsi une première luge avec une coque 1a adaptée pour un adulte, et une deuxième luge avec une coque 1b de dimensions plus petites, notamment adaptées pour un enfant ou un adolescent.

Chaque coque 1a, 1b est réalisée en une seule pièce, notamment par injection et moulage d'un matériau thermoplastique. Sur les figures, les coques 1a, 1b présentent toutes deux une forme sensiblement rectangulaire, notamment symétrique par rapport à un plan vertical longitudinal.

Pour empêcher la neige de pénétrer dans la coque 1a, 1b durant son utilisation, chaque structure d'assise 3a, 3b présente deux parois latérales 4a, 4b qui s'étendent chacune verticalement de part et d'autre d'un siège 5a, 5b de ladite structure d'assise, ainsi que deux parois respectivement avant 6a, 6b et arrière 7a, 7b qui présentent chacune un bord libre qui est surélevé par rapport à la structure de glisse 3a, 3b.

Comme représenté sur les figures, la paroi arrière 7a, 7b s'étend sensiblement verticalement à l'arrière de la structure d'assise 3a, 3b. En outre, la paroi avant 6a, 6b s'étend suivant une direction sensiblement oblique depuis un bord avant de la structure d'assise 3a, 3b, afin de former un bord d'attaque pour faciliter les déplacements de la luge sur un terrain neigeux.

La paroi avant 6a, 6b est également équipée d'un moyen 8a, 8b pour permettre une préhension manuelle de la luge et/ou la fixation sur ladite luge d'une corde ou d'une sangle, afin de permettre à un utilisateur de traîner ladite luge sur un terrain neigeux, notamment avec un autre utilisateur occupant la surface d'assise 3a, 3b.

De façon avantageuse, la deuxième coque 1b présente une géométrie agencée pour permettre son empilement sur la première coque 1a lorsque l'ensemble n'est pas utilisé, ce qui permet de limiter son encombrement, et ainsi de faciliter son rangement et son transport, notamment dans un coffre de voiture.

En particulier, la deuxième coque 1b est agencée pour permettre, lors de son empilement sur la première coque 1a, la disposition de la deuxième structure d'assise 3b au-dessus de la première structure d'assise 3a.

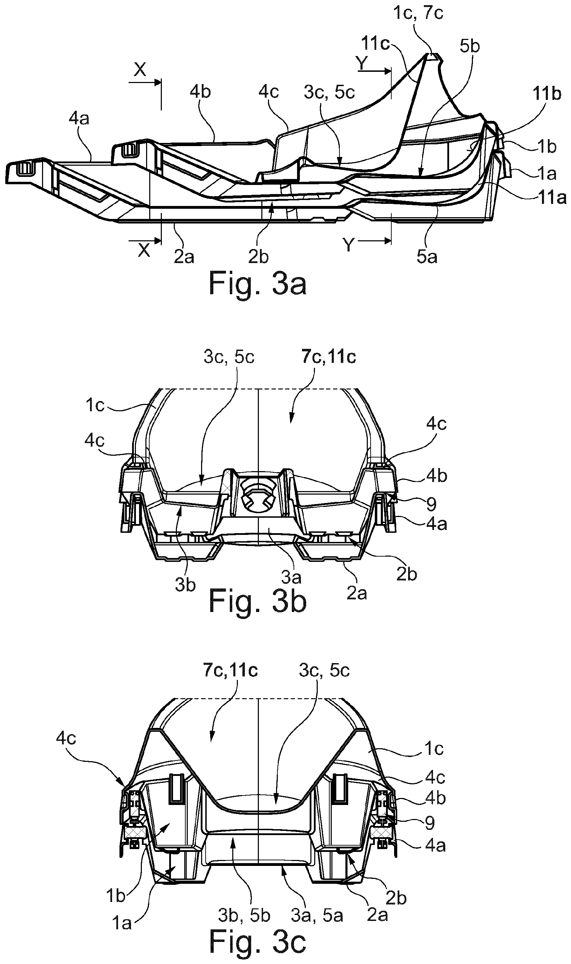

Pour ce faire, en relation avec les figures 3b et 3c, les parois latérales 4b de la deuxième coque 1b sont agencées pour venir en appui vertical en au moins deux zones 9 sur respectivement une paroi latérale 4a de la première coque 1a, afin de stabiliser leur empilement.

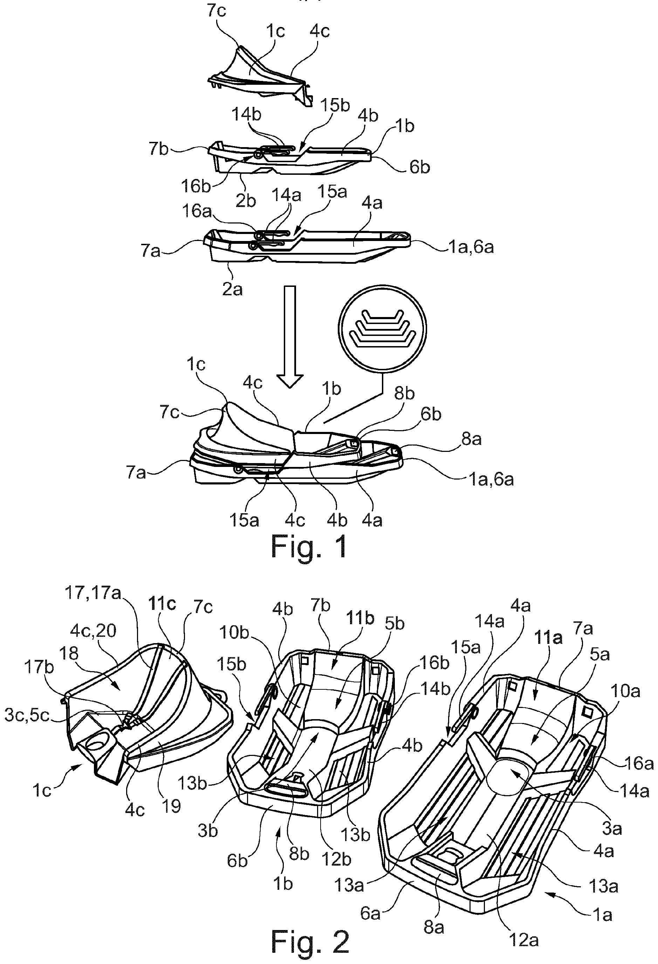

Comme représenté notamment sur la figure 2, les structures d'assise 3a, 3b sont chacune formée en relief dans leur coque 1a, 1b respective. En particulier, chaque coque 1a, 1b comprend un fond 10a, 10b sur lequel la structure d'assise 3a, 3b est formée en relief, et sous lequel est formée la structure externe 2a, 2b de glisse.

La structure d'assise 3a, 3b comprend un siège arrière 5a, 5b formé en relief sur le fond 10a, 10b, et la paroi arrière 7a, 7b présente une structure verticale en relief formant un dossier 11a, 11b pour ledit siège. Par ailleurs, la structure d'assise 3a, 3b comprend une plateforme centrale 12a, 12b s'étendant longitudinalement entre un bord avant du siège 5a, 5b et le bord supérieur de la paroi avant 6a, 6b, deux emplacements 13a, 13b étant formés de part et d'autre de ladite plateforme pour recevoir respectivement une jambe de l'utilisateur.

Pour permettre à un utilisateur occupant le siège d'assise 5a, 5b de contrôler ses déplacements, chaque luge comprend un dispositif de freinage qui est actionné par au moins une poignée 14a, 14b montée sur une des parois latérales 4a, 4b. Sur les figures, les luges comprennent chacune un dispositif de freinage qui comprend deux poignées 14a, 14b d'actionnement montées chacune sur respectivement une paroi latérale 4a, 4b de ladite luge, l'utilisateur actionnant sélectivement au moins l'une desdites poignées pour effectuer un freinage.

Chaque paroi latérale 4a, 4b comprend un évidement 15a, 15b qui est formé sur son bord supérieur, ledit évidement comprenant une portée arrière 16a, 16b sur laquelle est montée une poignée de freinage 14a, 14b.

La luge comprend en outre un module 1c présentant une structure alternative d'assise 3c, notamment adaptée à un jeune enfant et/ou à un bébé, ledit module étant agencé pour pouvoir être monté de façon réversible dans une coque 1a, 1b en venant recouvrir sa structure d'assise 3a, 3b, afin de conférer à ladite luge une configuration alternative d'assise.

Ainsi, on obtient un ensemble de glisse pouvant être utilisé par un enfant tout au long de sa croissance. En particulier, le module 1c est agencé pour pouvoir être monté de façon réversible dans l'une quelconque des première et deuxième coques 1a, 1b pour lui conférer une configuration d'assise alternative.

Pour empêcher un jeune enfant occupant la luge d'actionner le dispositif de freinage 14a, 14b de façon intempestive, notamment lorsqu'un autre utilisateur traîne ladite luge sur le sol, le module 1c comprend au moins une structure latérale 4c qui, lorsqu'il est monté dans une coque 1a, 1b, est agencée pour venir empêcher l'actionnement d'une poignée de freinage 14a, 14b de ladite coque.

Dans le mode de réalisation représenté, le module 1c comprend deux structures latérales 4c agencées pour venir chacune empêcher l'actionnement de respectivement une poignée de freinage 14a, 14b lors de son montage sur l'une des coques 1a, 1b.

La structure alternative d'assise 3c est formée en relief dans le module 1c. En particulier, le module 1c comprend une paroi 7c s'étendant sensiblement verticalement à l'arrière de sa structure d'assise 3c, et notamment dans le prolongement périphérique de chacune des structures latérales 4c, ladite paroi arrière formant en outre un dossier 11c pour le siège 5c de ladite structure d'assise.

Pour limiter le risque de chute d'un jeune enfant hors de la luge, le module 1c comprend un harnais de sécurité 17 pour attacher l'utilisateur occupant la structure alternative d'assise 3c.

Sur les figures, le harnais 17 comprend :
- deux bretelles 17a présentent chacune une extrémité supérieure fixée en partie supérieure du dossier 11c, et une extrémité inférieure équipée d'un moyen de fixation réversible ;
- une boucle 17b fixée à l'avant du siège 5c, et agencée pour recevoir les moyens de fixation réversible de chaque bretelle 17a lors de l'utilisation dudit harnais.

Les structures latérales 4c comprennent chacune deux parois respectivement interne 18 et externe 19 s'étendant verticalement en étant reliées par une paroi supérieure 20, lesdites parois étant agencées pour recouvrir une poignée 14a, 14b lors du montage du module 1c dans une coque 1a, 1b.

De façon avantageuse, les parois 18, 19, 20 sont agencées pour permettre aux structures latérales 4c de venir dans le prolongement périphérique des parois latérales 4a, 4b d'une coque 1a, 1b lors du montage du module 1c dans ladite coque. Un tel agencement permet d'améliorer l'aspect esthétique de la luge, mais également d'éviter la formation de saillies contre lesquels un utilisateur pourrait s'accrocher et/ou se cogner.

Le module 1c comprend des moyens de fixation réversible agencés pour coopérer avec des moyens complémentaires formés sur les coques 1a, 1b lors du montage du module 1c dans l'une desdites coques.

L'un parmi les moyens de fixation et les moyens complémentaires peuvent comprendre au moins une patte d'encliquetage 21, 22, notamment venue de matière avec le module 1c ou la coque 1a, 1b, l'autre parmi lesdits moyens de fixation et lesdits moyens complémentaires comprenant un orifice 23, 24 de réception de ladite patte.

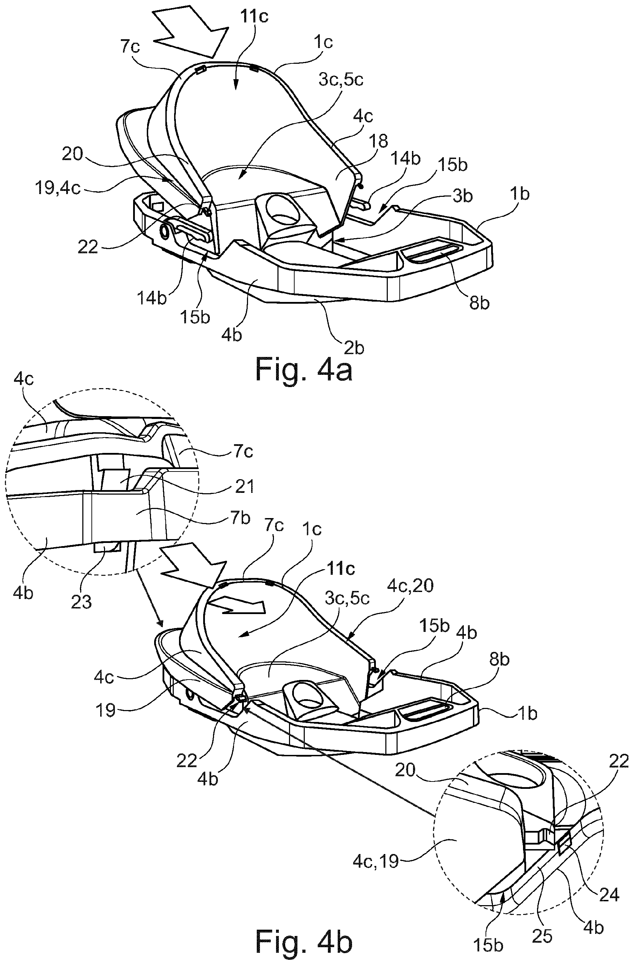

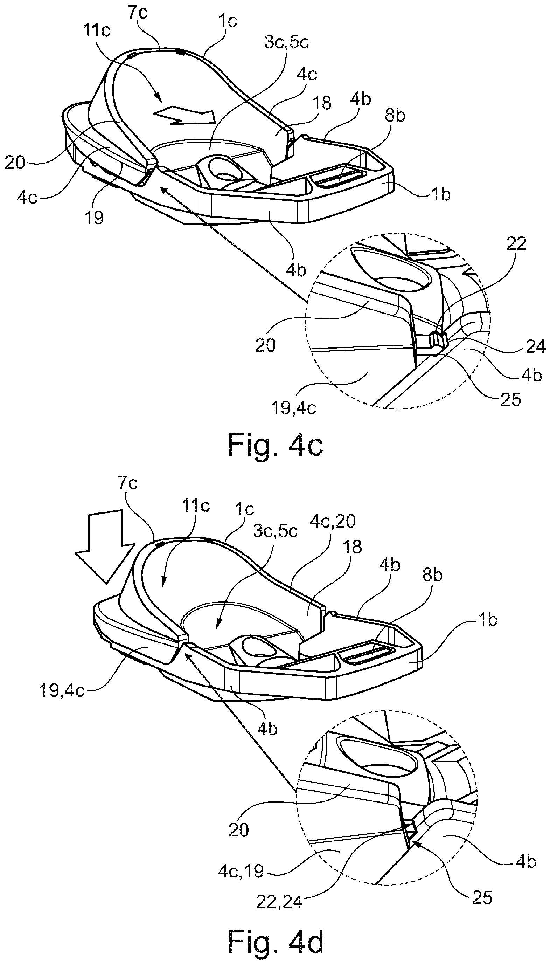

En relation avec les figures 4a, 4b, 4c et 4d, on décrit le montage du module 1c sur la coque 1b adaptée pour un enfant ou un adolescent. De façon non représentée, le module 1c peut également être monté sur la coque 1a adaptée pour un adulte, ladite coque pour adulte présentant pour ce faire des moyens de fixation ou complémentaire semblables à ceux de la coque 1b pour enfant ou adolescent.

Sur la figure 4b, le module 1c et la coque 1b comprennent respectivement des moyens de fixation et des moyens complémentaires formés à l'arrière de leur structure d'assise 3b, 3c respective.

En particulier, comme représenté sur l'agrandissement en haut à gauche de cette même figure, le module 1c comprend une patte d'encliquetage 21 formée sous un bord inférieur de sa paroi arrière 7c, la coque 1b comprenant un orifice 23 formés sur un bord supérieur de la paroi arrière 7b et agencé pour recevoir ladite patte.

De façon avantageuse, le module 1c peut comprendre deux pattes d'encliquetage 21 telles que décrites ci-dessus, et la coque 1b peut comprendre deux orifices 23 formés de part et d'autre du dossier 11b et agencés pour recevoir respectivement une desdites pattes. En variante, éventuellement complémentaire, le module 1c et la coque 1b présentent, notamment au niveau de leur paroi arrière 7b, 7c, chacun un orifice au travers desquels une sangle est serrée afin de venir sécuriser leur fixation.

Comme représenté sur les agrandissements des figures 4b, 4c et 4d, les structures latérales 4c comprennent chacune une extrémité avant équipée d'une patte d'encliquetage 22, notamment venue de matière avec ladite structure. Par ailleurs, les parois latérales 4b de la coque 1b présentent chacune un orifice 24 complémentaire formé sur une portée avant 25 de l'évidement 15b, les pattes 22 étant agencées pour coopérer chacune avec l'orifice 24 de la paroi latérale 4b correspondante lors du montage du module 1c dans la coque 1b.

Pour monter le module 1c dans la coque 1b, l'utilisateur dispose d'abord ledit module au-dessus de ladite coque, de manière à disposer la structure alternative d'assise 3c au-dessus du siège 5b de ladite coque, et les pattes d'encliquetage 21, 22 en regard de leurs orifices 23, 24 de montage respectifs (figures 4a, 4b).

Ensuite, pour finaliser le montage, l'utilisateur doit successivement :
- faire coulisser le module 1c légèrement vers l'avant, afin d'engager chaque patte avant 22 dans son orifice 24 correspondant (figure 4c); et
- rabattre la paroi arrière 7c du module 1c sur la paroi arrière 7b de la coque 1b, afin d'engager la(les) patte(s) arrière 21 dans l'(les) orifice(s) arrière 23 (figure 4d).

## Revendications

1. Luge modulable comprenant une coque (1a, 1b) présentant une structure externe (2a, 2b) de glisse et une structure interne (3a, 3b) d'assise pour au moins un utilisateur, ladite structure d'assise présentant deux parois latérales (4a, 4b) qui s'étendent chacune verticalement de part et d'autre d'un siège (5a, 5b) de ladite structure d'assise, ladite luge comprenant en outre un dispositif de freinage qui est actionné par au moins une poignée (14a, 14b) montée sur une des parois latérales (4a, 4b), ladite luge étant **caractérisée en ce qu'**elle comprend un module (1c) présentant une structure alternative d'assise (3c), ledit module étant agencé pour pouvoir être monté de façon réversible dans la coque (1a, 1b) en venant recouvrir sa structure d'assise (3a, 3b) afin de conférer à ladite luge une configuration alternative d'assise, ledit module comprenant au moins une structure latérale (4c) qui, lorsqu'il est monté dans la coque (1a, 1b), est agencée pour venir empêcher l'actionnement de la poignée (14a, 14b) du dispositif de freinage.

2. Luge modulable selon la revendication 1, **caractérisée en ce que** le dispositif de freinage comprend deux poignées d'actionnement (14a, 14b) montées chacune sur respectivement une paroi latérale (4a, 4b), le module (1c) comprenant deux structures latérales (4c) agencées pour venir chacune empêcher l'actionnement de respectivement une poignée (14a, 14b) lorsque ledit module est monté dans la coque (1a, 1b).

3. Luge modulable selon l'une des revendications 1 ou 2, **caractérisée en ce que** le module (1c) comprend des moyens de fixation réversible (21, 22) agencés pour coopérer avec des moyens complémentaires (23, 24) formés sur la coque (1a, 1b) lors du montage dudit module dans ladite coque.

4. Luge modulable selon la revendication 3, **caractérisée en ce que** la structure latérale (4c) comprend une extrémité avant équipée de moyens (22) de fixation réversible, lesdits moyens de fixation réversible étant agencés pour coopérer avec des moyens complémentaires (24) formés sur la paroi latérale (4a, 4b) correspondante lors du montage du module (1c) dans la coque (1a, 1b).

5. Luge modulable selon l'une des revendications 3 ou 4, **caractérisée en ce que** le module (1c) et la coque (1a, 1b) comprennent respectivement des moyens de fixation (21) et des moyens complémentaires (23) formés à l'arrière de leur structure d'assise (3a, 3b, 3c) respective.

6. Luge modulable selon l'une quelconque des revendications 3 à 5, **caractérisée en ce que** l'un parmi les moyens de fixation et les moyens complémentaires comprend une patte d'encliquetage (21, 22), l'autre parmi lesdits moyens de fixation et lesdits moyens complémentaires comprenant un orifice (23, 24) de réception de ladite patte.

7. Luge modulable selon l'une quelconque des revendications 1 à 6, **caractérisée en ce que** le module (1c) et la coque (1b) présentent chacun un orifice au travers desquels une sangle est serrée afin de venir sécuriser leur fixation

8. Luge modulable selon l'une quelconque des revendications 1 à 7, **caractérisé en ce que** la structure d'assise (3a, 3b) et la structure alternative d'assise (3c) sont chacune formées en relief dans respectivement la coque (1a, 1b) et le module (1c).

9. Luge modulable selon la revendication 8, **caractérisée en ce que** le module (1c) et la coque (1a, 1b) comprennent chacun une paroi (7a, 7b, 7c) s'étendant sensiblement verticalement à l'arrière de leur structure d'assise (3a, 3b, 3c) respective, ladite paroi arrière formant un dossier (11a, 11b, 11c) pour le siège (5a, 5b, 5c) de ladite structure d'assise.

10. Luge modulable selon l'une quelconque des revendications 1 à 9, **caractérisée en ce que** le module (1c) comprend un harnais de sécurité (17) pour attacher un utilisateur occupant la structure d'assise alternative (3c).

11. Luge modulable selon l'une quelconque des revendications 1 à 10, **caractérisée en ce que** la structure latérale (4c) comprend deux parois respectivement interne (18) et externe (19) s'étendant verticalement en étant reliées par une paroi supérieure (20), lesdites parois étant agencées pour recouvrir la poignée (14a, 14b) lors du montage du module (1c) dans la coque (1a, 1b).

12. Luge modulable selon l'une quelconque des revendications 1 à 11, **caractérisée en ce que** la structure latérale (4c) du module (1c) est agencée pour venir dans le prolongement périphérique de la paroi latérale (4a, 4b) de la coque (1a, 1b) lors du montage dudit module dans ladite coque.

13. Ensemble comprenant une première luge modulable selon l'une quelconque des revendications 1 à 12, et une deuxième luge comprenant une deuxième coque (1a, 1b), le module (1c) étant agencé pour pouvoir être monté de façon réversible dans l'une quelconque des coques (1a, 1b) pour lui conférer une configuration alternative d'assise.

14. Ensemble selon la revendication 13, **caractérisé en ce que** la deuxième coque (1b) présente une deuxième structure interne d'assise (3b) et deux parois latérales (4b) s'étendant chacune de part et d'autre d'un deuxième siège (5b) de ladite deuxième structure d'assise, ainsi qu'un deuxième dispositif de freinage actionné par au moins une deuxième poignée (14b) montée sur l'une desdites parois latérales, le module (1c) étant agencé pour empêcher l'actionnement de la deuxième poignée (14b) lors de son montage dans la deuxième coque (1b).

15. Ensemble selon l'une des revendications 13 ou 14, **caractérisé en ce que** la deuxième coque (1b) présente une géométrie agencée pour permettre son empilement sur la première coque (1a) lorsque ledit ensemble n'est pas utilisé.

16. Ensemble selon la revendication 15, **caractérisé en ce que** la deuxième coque (1b) est agencée pour permettre, lors de son empilement sur la première coque (1a), la disposition de la deuxième structure d'assise (3b) au-dessus de la première structure d'assise (3a).

## Patentansprüche

1. Modularer Schlitten, umfassend eine Schale (1a, 1b) mit einer äußeren Gleitstruktur (2a, 2b) und einer inneren Sitzstruktur (3a, 3b) für mindestens einen Benutzer, wobei die Sitzstruktur zwei Seitenwände (4a, 4b) aufweist, die sich jeweils vertikal auf beiden Seiten eines Sitzes (5a, 5b) der Sitzstruktur erstrecken, wobei der Schlitten ferner eine Bremsvorrichtung umfasst, die durch mindestens einen Griff (14a, 14b) betätigt wird, der an einer der Seitenwände (4a, 4b) montiert ist, wobei der Schlitten **dadurch gekennzeichnet ist, dass** er ein Modul (1c) umfasst, die eine alternative Sitzstruktur (3c) aufweist, wobei das Modul so angeordnet ist, dass es reversibel in der Schale (1a, 1b) montiert werden kann, indem seine Sitzstruktur (3a, 3b) abgedeckt wird, um dem Schlitten eine alternative Sitzkonfiguration zu verleihen, wobei das Modul mindestens eine seitliche Struktur (4c) umfasst, die, wenn sie in der Schale (1a, 1b) montiert ist, so angeordnet ist, dass sie die Betätigung des Griffs (14a, 14b) der Bremsvorrichtung verhindert.

2. Modularer Schlitten nach Anspruch 1, **dadurch gekennzeichnet, dass** die Bremsvorrichtung zwei Betätigungsgriffe (14a, 14b) umfasst, die jeweils an einer Seitenwand (4a, 4b) montiert sind, wobei das Modul (1c) zwei Seitenstrukturen (4c) umfasst, die so angeordnet sind, dass sie jeweils die Betätigung eines Griffs (14a, 14b) verhindern, wenn das Modul in der Schale (1a, 1b) montiert ist.

3. Modularer Schlitten nach einem der Ansprüche 1 oder 2, **dadurch gekennzeichnet, dass** das Modul (1c) reversible Befestigungsmittel (21, 22) umfasst, die so angeordnet sind, dass sie bei der Montage des Moduls in der Schale mit komplementären Mitteln (23, 24) zusammenwirken, die an der Schale (1a, 1b) ausgebildet sind.

4. Modularer Schlitten nach Anspruch 3, **dadurch gekennzeichnet, dass** die Seitenstruktur (4c) ein vorderes Ende umfasst, das mit einem reversiblen Befestigungsmittel (22) ausgestattet ist, wobei das reversible Befestigungsmittel so angeordnet ist, dass es bei der Montage des Moduls (1c) in der Schale (1a, 1b) mit einem komplementären Mittel (24) zusammenwirkt, das an der entsprechenden Seitenwand (4a, 4b) ausgebildet ist.

5. Modularer Schlitten nach einem der Ansprüche 3 oder 4, **dadurch gekennzeichnet, dass** das Modul (1c) und die Schale (1a, 1b) jeweils ein Befestigungsmittel (21) umfassen und ein komplementäres Mittel (23) umfassen, die auf der Rückseite ihrer jeweiligen Sitzstruktur (3a, 3b, 3c) ausgebildet sind.

6. Modularer Schlitten nach einem der Ansprüche 3 bis 5, **dadurch gekennzeichnet, dass** eines des Befestigungsmittels und des komplementären Mittels eine Einrastlasche (21, 22) umfasst, wobei das andere des Befestigungsmittels und des komplementären Mittels eine Öffnung (23, 24) zur Aufnahme der Lasche umfasst.

7. Modularer Schlitten nach einem der Ansprüche 1 bis 6, **dadurch gekennzeichnet, dass** das Modul (1c) und die Schale (1b) jeweils eine Öffnung aufweisen, durch die ein Gurt gespannt wird, um ihre Befestigung zu sichern.

8. Modularer Schlitten nach einem der Ansprüche 1 bis 7, **dadurch gekennzeichnet, dass** die Sitzstruktur (3a, 3b) und die alternative Sitzstruktur (3c) als Relief in der Schale (1a, 1b) bzw. im Modul (1c) ausgebildet sind.

9. Modularer Schlitten nach Anspruch 8, **dadurch gekennzeichnet, dass** das Modul (1c) und die Schale (1a, 1b) jeweils eine Wand (7a, 7b, 7c) umfassen, die sich im Wesentlichen vertikal an der Rückseite ihrer jeweiligen Sitzstruktur (3a, 3b, 3c) erstreckt, wobei die Rückwand eine Rückenlehne (11a, 11b, 11c) für den Sitz (5a, 5b, 5c) der Sitzstruktur bildet.

10. Modularer Schlitten nach einem der Ansprüche 1 bis 9, **dadurch gekennzeichnet, dass** das Modul (1c) einen Sicherheitsgurt (17) zum Befestigen eines Benutzers umfasst, der die alternative Sitzstruktur (3c) besetzt.

11. Modularer Schlitten nach einem der Ansprüche 1 bis 10, **dadurch gekennzeichnet, dass** die Seitenstruktur (4c) jeweils eine Innen- (18) und eine Außenwand (19) umfasst, die sich vertikal erstrecken und durch eine obere Wand (20) verbunden sind, wobei die Wände so angeordnet sind, dass sie den Griff (14a, 14b) bei der Montage des Moduls (1c) in der Schale (1a, 1b) abdecken.

12. Modularer Schlitten nach einem der Ansprüche 1 bis 11, **dadurch gekennzeichnet, dass** die Seitenstruktur (4c) des Moduls (1c) so angeordnet ist, dass sie bei der Montage des Moduls in der Schale in die Umfangsverlängerung der Seitenwand (4a, 4b) der Schale (1a, 1b) kommt.

13. Anordnung, umfassend einen ersten modularen Schlitten nach einem der Ansprüche 1 bis 12, und einen zweiten Schlitten, der eine zweite Schale (1a, 1b) umfasst, wobei das Modul (1c) so angeordnet ist, dass es reversibel in einer der Schalen (1a, 1b) montiert werden kann, um ihm eine alternative Sitzkonfiguration zu verleihen.

14. Anordnung nach Anspruch 13, **dadurch gekennzeichnet, dass** die zweite Schale (1b) eine zweite innere Sitzstruktur (3b) und zwei Seitenwände (4b), die sich jeweils auf beiden Seiten eines zweiten Sitzes (5b) der zweiten Sitzstruktur erstrecken, sowie eine zweite Bremsvorrichtung aufweist, die durch mindestens einen zweiten Griff (14b) betätigt wird, der an einer der genannten Seitenwände montiert ist, wobei das Modul (1c) so angeordnet ist, dass es die Betätigung des zweiten Griffs (14b) bei seiner Montage in der zweiten Schalte (1b) verhindert.

15. Anordnung nach einem der Ansprüche 13 oder 14, **dadurch gekennzeichnet, dass** die zweite Schale (1b) eine Geometrie aufweist, die so angeordnet ist, dass sie auf der ersten Schale (1a) gestapelt werden kann, wenn die Anordnung nicht in Gebrauch ist.

16. Anordnung nach Anspruch 15, **dadurch gekennzeichnet, dass** die zweite Schale (1b) so angeordnet ist, dass sie, wenn sie auf der ersten Schale (1a) gestapelt ist, die Bereitstellung der zweiten Sitzstruktur (3b) über der ersten Sitzstruktur (3a) ermöglicht.

## Claims

1. A modulable sledge comprising a shell (1a, 1b) having an outer slide structure (2a, 2b) and an inner seating structure (3a, 3b) for at least one user, said seating structure having two lateral walls (4a, 4b) each extending vertically on either side of a seat (5a, 5b) of said seating structure, said sledge further comprising a brake device which is actuated by at least one handle (14a, 14b) mounted on one of the lateral walls (4a, 4b), said sledge being **characterised in that** it comprises a module (1c) having an alternative seating structure (3c), said module being arranged so as to be able to be reversibly mounted in the shell (1a, 1b) by covering its seating structure (3a, 3b) in order to confer an alternative seating configuration on said sledge, said module comprising at least one lateral structure (4c) which, when it is mounted in the shell (1a, 1b), is arranged so as to prevent the actuation of the handle (14a, 14b) of the brake device.

2. The modulable sledge according to claim 1, **characterised in that** the brake device comprises two actuating handles (14a, 14b) each mounted on respectively one lateral wall (4a, 4b), the module (1c) comprising two lateral structures (4c) each arranged so as to prevent the actuation of respectively one handle (14a, 14b) when said module is mounted in the shell (1a, 1b).

3. The modulable sledge according to one of claims 1 or 2, **characterised in that** the module (1c) comprises reversible fastening means (21, 22) arranged so as to cooperate with complementary means (23, 24) formed on the shell (1a, 1b) during mounting of said module in said shell.

4. The modulable sledge according to claim 3, **characterised in that** the lateral structure (4c) comprises a front end equipped with reversible fastening means (22), said reversible fastening means being arranged so as to cooperate with complementary means (24) formed on the corresponding lateral wall (4a, 4b) during mounting of the module (1c) in the shell (1a, 1b).

5. The modulable sledge according to one of claims 3 or 4, **characterised in that** the module (1c) and the shell (1a, 1b) respectively comprise fastening means (21) and complementary means (23) formed at the rear of their respective seating structure (3a, 3b, 3c).

6. The modulable sledge according to any one of claims 3 to 5, **characterised in that** one amongst the fastening means and the complementary means comprises a snap-fitting tab (21, 22), the other one amongst said fastening means and said complementary means comprising an orifice (23, 24) for receiving said tab.

7. The modulable sledge according to any one of claims 1 to 6, **characterised in that** each of the module (1c) and the shell (1b) has an orifice throughout which a strap is tightened in order to secure fastening thereof.

8. The modulable sledge according to any one of claims 1 to 7, **characterised in that** each of the seating structure (3a, 3b) and the alternative seating structure (3c) is formed in relief in the shell (1a, 1b) and the module (1c) respectively.

9. The modulable sledge according to claim 8, **characterised in that** each of the module (1c) and the shell (1a, 1b) comprises a wall (7a, 7b, 7c) extending substantially vertically at the rear of their respective seating structure (3a, 3b, 3c), said rear wall forming a backrest (11a, 11b, 11c) for the seat (5a, 5b, 5c) of said seating structure.

10. The modulable sledge according to any one of claims 1 to 9, **characterised in that** the module (1c) comprises a safety harness (17) for attaching a user occupying the alternative seating structure (3c).

11. The modulable sledge according to any one of claims 1 to 10, **characterised in that** the lateral structure (4c) comprises two respectively inner (18) and outer (19) walls extending vertically while being connected by an upper wall (20), said walls being arranged so as to cover the handle (14a, 14b) during mounting of the module (1c) in the shell (1a, 1b).

12. The modulable sledge according to any one of claims 1 to 11, **characterised in that** the lateral structure (4c) of the module (1c) is arranged so as to lie in the peripheral continuation of the lateral wall (4a, 4b) of the shell (1a, 1b) during mounting of said module in said shell.

13. A set comprising a first modulable sledge according to any one of claims 1 to 12, and a second sledge comprising a second shell (1a, 1b), the module (1c) being arranged so as to be able to be reversibly mounted in any one of the shells (1a, 1b) so as to confer an alternative seating configuration thereon.

14. The set according to claim 13, **characterised in that** the second shell (1b) has an inner seating structure (3b) and two lateral walls (4b) each extending on either side of a second seat (5b) of said second seating structure, as well as a second brake device actuated by at least one second handle (14b) mounted on one of said lateral walls, the module (1c) being arranged so as to prevent the actuation of the second handle (14b) during mounting thereof in the second shell (1b).

15. The set according to one of claims 13 or 14, **characterised in that** the second shell (1b) has a geometry arranged so as to enable stacking thereof on the first shell (1a) when said set is not used.

16. The set according to claim 15, **characterised in that** the second shell (1b) is arranged so as to enable, during staking thereof on the first shell (1a), the arrangement of the second seating structure (3b) above the first seating structure (3a).
